# EUROPÄISCHE PATENTSCHRIFT

(11) **EP 3 380 324 B1**
(45) Veröffentlichungstag und Bekanntmachung des Hinweises auf die Patenterteilung: **31.03.2021**
(21) Anmeldenummer: 16805749.5
(22) Anmeldetag: 24.11.2016
(51) Int. Cl.: B32B 18/00, C04B 35/532, C04B 35/573, C04B 35/626, B28B 1/00, B33Y 10/00, B29C 64/165

(54) **3D DRUCKEN VON EINEM KERAMISCHEN BAUTEIL**
3-D PRINTING OF A CERAMIC COMPONENT
FABRICATION ADDITIVE D'UN ÉLÉMENT CÉRAMIQUE

(30) Priorität: 24.11.2015 DE 102015223236
(43) Veröffentlichungstag der Anmeldung: 03.10.2018
(73) Patentinhaber: SGL Carbon SE, 65201 Wiesbaden (DE)
(72) Erfinder: ÖTTINGER, Oswin, 86405 Meitingen (DE); RIVOLA, Dominik, 86405 Meitingen (DE); KLEIN, Stefan, 86405 Meitingen (DE); KIENZLE, Andreas, 86405 Meitingen (DE); KRÄTSCHMER, Ingrid, 86485 Biberbach (DE)
(86) Internationale Anmeldenummer: PCT/EP2016/078735
(87) Internationale Veröffentlichungsnummer: WO 2017/089494

(56) Entgegenhaltungen:
- EP-A1- 2 998 282
- DE-A1- 19 730 742
- DE-A1- 19 809 657
- DE-A1-102009 048 424
- DE-A1-102011 007 815
- US-A1- 2010 279 007
- B Y Stevinson ET AL: "SUPPORT-FREE INFILTRATION OF SELECTIVE LASER SINTERED (SLS) SILICON CARBIDE PREFORMS", , 14. August 2006 (2006-08-14), Seiten 359-366, XP055240077, Gefunden im Internet: URL:http://sffsymposium.engr.utexas.edu/Ma nuscripts/2006/2006-33-Stevinson.pdf [gefunden am 2016-01-11]
- JOOHO MOON ET AL: "Fabrication of functionally graded reaction infiltrated SiC-Si composite by three-dimensional printing (3DP(TM)) process", MATERIALS SCIENCE AND ENGINEERING: A, Bd. 298, Nr. 1-2, 1. Januar 2001 (2001-01-01), Seiten 110-119, XP055272634, AMSTERDAM, NL ISSN: 0921-5093, DOI: 10.1016/S0921-5093(00)01282-X

## Beschreibung

Die vorliegende Erfindung betrifft ein dreidimensionales, keramisches Bauteil enthaltend Siliziumkarbid, ein Verfahren zur Herstellung des Bauteils sowie die Verwendung des Bauteils.

Siliziumkarbidkeramik zeichnet sich insbesondere durch seine Härte, Abriebbeständigkeit, chemische Stabilität und Temperaturbeständigkeit aus. Ein Weg dieses Material herzustellen ist, kohlenstoffhaltige Füllstoffe zusammen mit einem Binder zu verpressen und zu einem Grünkörper auszuhärten. Der Grünkörper wird anschließend bei erhöhter Temperatur carbonisiert, bzw. pyrolysiert, sodass ein Kohlenstoffkörper entsteht, welcher schließlich mit flüssigem Silizium infiltriert wird, wobei der Kohlenstoff mit Silizium reagiert und SiC bildet. Typischerweise wird durch derartige Verfahren ein Verbundwerkstoff erhalten, der neben SiC noch nicht reagierten Kohlenstoff und freies Silizium enthält. Man spricht daher von einem C/Si/SiC-Verbundwerkstoff.

Die mechanische Bearbeitung von Siliziumkarbidkeramik ist aufgrund der Härte des Materials sehr schwierig. Komplexere Strukturen aus Siliziumkarbidkeramik werden daher durch Fügen von Kohlenstoff-Einzelteilen vor der Silizierung zu einem Gesamtbauteil erzielt, wobei auch bei diesem Verfahren der Komplexität des herzustellenden Bauteils Grenzen gesetzt sind. Ein derartiges Verfahren ist beispielsweise in der DE 10 2011 007 815 A1 beschrieben. Weiterhin nachteilig ist, dass durch die Fügestellen Inhomogenitäten im Material des finalen Bauteils vorliegen können.

Jooho Moon et al., Materials Science and Engineering, A298, (2001), 110 - 119 beschreibt die Herstellung eines Si/SiC-Bauteils unter Verwendung des 3D-Druckverfahrens. Hierbei wird mittels des 3D-Druckverfahrens ein Grünkörper unter Verwendung von mikroporösem Glaskohlenstoff hergestellt, und anschließend dieser Grünkörper einer Flüssigsilizierung unterzogen. Ziel hierbei ist es, den Glaskohlenstoff vollständig in SiC umzuwandeln, so dass ein Bauteil erhalten wird, welches im Wesentlichen aus einem Si/SiC-Werkstoff (Zweistoff-System) besteht. Einhergehend mit dem hohen SiC-Anteil wird die Bauteildichte erhöht.

Die Aufgabe der vorliegenden Erfindung ist es daher, ein isotropes, keramisches Bauteil bereitzustellen, welches eine niedrigere Dichte und trotzdem eine hohe Oxidationsbeständigkeit aufweist und zudem frei von Fügestellen ist, in praktisch unbegrenzter geometrischer Komplexität erzeugt werden kann und dabei einfach und kostengünstig hergestellt werden kann.

Im Rahmen der vorliegenden Erfindung wurde gefunden, dass der für die Carbonisierung und Silizierung vorgesehene Grünkörper mittels einem 3D-Druckverfahren hergestellt werden kann, und dieser Grünkörper sich hervorragend mit flüssigem Silizium infiltrieren lässt, um ein isotropes, keramisches Bauteil zu erhalten, welches ein Mehrstoffsystem enthaltend C/Si/SiC umfasst. Der letztgenannte Schritt funktioniert unter gewissen Voraussetzungen, welche im Einzelnen weiter unten beschrieben werden, derart gut, dass flüssiges Silizium aufgrund der Kapillarkräfte von alleine den carbonisierten Grünkörper infiltriert.

Das Verfahren zur Herstellung eines solchen dreidimensionalen, keramischen Bauteils enthaltend Siliziumkarbid umfasst folgende Schritte:
a) Bereitstellen einer pulverförmigen Zusammensetzung mit einer Körnung (d50) zwischen 3 µm und 500 µm umfassend zumindest 50 Gew.-% Koks, wobei die Partikel der pulverförmigen Zusammensetzung im Korngrößenbereich des d(50)-Werts, was den d(50)-Wert +/- 10 % darstellt, im Mittel einen Formfaktor (Breite/Länge) von mindestens 0,5 aufweisen,
b) Bereitstellen eines flüssigen Binders,
c) flächiges Ablegen einer Lage aus dem in a) bereitgestellten Material und lokales Ablegen von Tröpfchen des in b) bereitgestellten Materials auf diese Lage und Wiederholen des Schrittes c), wobei das lokale Ablegen der Tröpfchen in den jeweils nachfolgenden Wiederholungen dieses Schrittes entsprechend der gewünschten Form des herzustellenden Bauteils angepasst wird,
d) zumindest teilweises Aushärten oder Trocknen des Binders und Erhalt eines die gewünschte Form des Bauteils aufweisenden Grünkörpers,
e) Carbonisieren des Grünkörpers und
f) Silizieren des carbonisierten Grünkörpers durch Infiltration mit flüssigem Silizium, wobei sich der Grünkörper oberhalb der Schmelztemperatur von Silizium und im Wesentlichen über der Oberfläche eines Siliziumbades befindlich durch Kapillarkräfte mit Silizium vollsaugt.

Die erfindungsgemäße pulverförmige Zusammensetzung kann dabei sowohl ein Pulver aus Primärpartikel als auch ein Granulat darstellen.

Der Begriff "d50" bedeutet, dass 50 % der Partikel kleiner sind als der angegebene Wert. Der d50-Wert wurde unter Zuhilfenahme der lasergranulometrischen Methode bestimmt (ISO 13320), wobei ein Messgerät der Firma Sympatec GmbH mit zugehöriger Auswertesoftware verwendet wurde.

Unter dem Erhalt eines die gewünschte Form des Bauteils aufweisenden Grünkörpers im Rahmen der vorliegenden Erfindung ist Folgendes zu verstehen. Unmittelbar nach dem Aushärten oder Trocknen des Binders ist der Grünkörper noch von einer Pulverschüttung aus losen Partikeln der pulverförmigen Zusammensetzung umgeben. Der Grünkörper muss daher aus der Pulverschüttung entnommen bzw. von den losen, nicht-verfestigten Partikeln abgetrennt werden. Dies wird in der Literatur zu 3D-Druck auch als "Entpacken" des gedruckten Bauteils bezeichnet. An das Entpacken des Grünkörpers kann sich eine (Fein-)Reinigung desselben anschließen, um anhaftende Partikelreste zu entfernen. Das Entpacken kann z. B. durch Absaugen von den losen Partikeln mit einem leistungsstarken Sauger erfolgen. Die Art des Entpackens ist jedoch nicht besonders eingeschränkt und es können sämtliche bekannten Methoden angewandt werden.

Die Art des verwendeten Kokses ist dabei nicht besonders eingeschränkt. Unter anderem können Steinkohlenteerpechkoks, Petrolkoks, Acetylenkoks, Flexikoks, Fluidkoks und Shot Coke als Ausgangsstoffe dienen. Steinkohlenteerpechkoks wird folgendermaßen hergestellt: Bei der Herstellung von metallurgischen Koks aus Steinkohle wird als Beiprodukt Steinkohlenteer erzeugt. Dieser wird einer Destillation unterworfen und der Rückstand wird erneut verkokt. Der daraus erhaltene Pechkoks wird schließlich gemahlen. Petrolkoks wird bei der Atmosphären- und Vakuumdestillation von Rohöl gewonnen. Nach dem sogenannten Delayed Coking Prozess entsteht grüner Koks als Rückstand. Dieser wird typischerweise bei 1100-1300°C kalziniert und der so erhaltene Petrolkoks wird schließlich gemahlen. Fluidkoks und Flexikoks basieren ebenfalls auf der Rohölverarbeitung. Anstatt des Delayed Coking Prozesses wird hier jedoch das sogenannte Fluid Coking bzw. Flexi Coking angewandt, das beides charakteristischerweise in einem kontinuierlichen Wirbelbett stattfindet, was zu weitgehend kugelförmigen Partikeln führt. Acetylenkoks fällt als Abfallprodukt, zunächst grün, d.h. flüchtige Bestandteile enthaltend, in der Acetylenherstellung an, welche in der DE 29 47 005 A1 genau beschrieben ist.

Es ist auch möglich carbonisierte Ionenaustauscherharzkügelchen als den verwendeten Koks zu wählen. Der Vorteil dieses Ausgangsmaterials liegt in seiner nahezu perfekt kugelrunden Form. Die Vorteile einer möglichst runden Koksform werden weiter unten beschrieben.

Bevorzugt wird der Koks ausgewählt aus der Gruppe bestehend aus Acetylenkoks, Flexikoks, Fluidkoks, Shot Coke und Koks aus carbonisierten lonenaustauscherharzkügelchen. Acetylenkoks, Flexikoks, Fluidkoks können als Grünkoks, aber auch in kalzinierter Form, verwendet werden. Diese führen zu einem reibungslosen 3-D-Druckprozess und aufgrund der runden Partikel zu einer hervorragenden Rieselfähigkeit und zu einer erhöhten Bruchfestigkeit des keramischen Bauteils. Am meisten bevorzugt ist diesbezüglich Acetylenkoks, da er wenige Verunreinigungen aufweist und eine besonders sphärische Gestalt besitzt. Acetylenkoks ist weiterhin deshalb am meisten bevorzugt, da diese Kokssorte besonders rein ist. Der Aschewert liegt bei ca. 0,01%, und die metallische Verunreinigung, wie zum Beispiel für Na, Ni, Fe und V, liegen typischerweise durchweg weit unter 50 ppm. Flexikoks hingegen hat einen Aschewert im Bereich 1%. Oben genannte metallische Verunreinigungen liegen im Bereich von mehreren 100 ppm bis hin zu mehr als1000 ppm. Viele dieser Verunreinigung wirken katalytisch auf das Oxidationsverhalten des Materials. Verunreinigungen, wie z.B. Nickeloxide, in stark verunreinigten Koksen mit Gehalten grösser 0,1% sind sogar als krebserzeugend nach Kat 1A einzustufen, wodurch die Handhabbarkeit sowie Verarbeitbarkeit als auch die Verwendung von stark verunreinigten Koksen erheblich eingeschränkt wird. Darüber hinaus weisen die erfindungsgemäßen Formgebungswerkzeuge aus Acetylenkoks eine besonders hohe Gründichte und eine höhere Bruchfestigkeit auf, als die aus z.B. Flexikoks. Letzteres hat vermutlich in der zwiebelschalenartigen Struktur des Acetylenkokses seine Ursache. Die erfindungsgemäß am meisten bevorzugte Ausführungsform stellt daher ein erfindungsgemäßes Formgebungswerkzeug dar, in welchem die darin enthaltenen Kohlenstoffpartikel Acetylenkoks umfassen oder, bevorzugt, aus Acetylenkoks bestehen. Shot Coke ist eine isotrope Kokssorte dessen Partikel zu einer sphärischen Form neigen und teils zwiebelschalenartig aufgebaut sind (siehe: Paul J. Ellis, "Shot Coke", Light Metals, 1996, Seiten 477-484).

Grundsätzlich kann jede verwendete Kokssorte als sogenannter Grünkoks oder als kalzinierter Koks, beziehungsweise carbonisierter Koks, eingesetzt werden. Als Grünkoks wird der Koks bezeichnet, wenn dieser noch flüchtige Bestandteile enthält. Diese flüchtigen Bestandteile sind beim kalzinierten Koks, beziehungsweise carbonisierten Koks, nahezu nicht mehr vorhanden. Im Rahmen der vorliegenden Erfindung sind die Begriffe Carbonisierung, Kalzinierung und Pyrolyse als synonym zu verstehen.

Die pulverförmigen Zusammensetzung gemäß Schritt a) weist bevorzugt eine Körnung (d50) zwischen 50 µm und 350 µm, weiter bevorzugt zwischen 100 µm und 250 µm, auf. Bei kleineren Korngrößen ist das Verfahren kostenintensiver, da entsprechend mehr Lagen aufgetragen werden müssen. Gröbere Korngrößen führen wiederum zu entsprechend größeren Kohlenstoffbereichen im Bauteil, was sich nachteilig auf die mechanischen Eigenschaften auswirken kann. Um diese Korngrößen zu erreichen, kann der Koks gemahlen werden. Bei den bevorzugten Kokssorten mit relativ runder Form, wird jedoch bevorzugt nicht gemahlen, denn sonst würde die vorteilhafte runde Form zerstört werden. Hier wird daher die gewünschte Korngröße, beziehungsweise der gewünschte Korngrößenbereich bevorzugt durch Aussieben und Wahl der geeigneten Siebfraktion erhalten.

Die pulverförmige Zusammensetzung gemäß Schritt a) ist bevorzugt ein Granulat. Das bedeutet, die Partikel bestehen aus agglomerierten Primärpartikeln; folglich stellen Primärpartikel feine Ausgangspartikel, z.B. zum Herstellen von Granulaten dar. Besonders bevorzugt ist die Verwendung von Granulaten, im Falle von sehr kleinen Primärpartikeln, beispielsweise im Bereich von d50 = 3-50 µm. Durch die dadurch erhaltenen größeren Partikel (Agglomerate) ist der 3D-Druckprozess wirtschaftlicher. Durch die Granulierung kann weiterhin die Korngrößenverteilung verringert werden. Schließlich kann durch die Granulation von kleineren unrunden Partikeln, wie Stäbchen oder Flocken, eine runde Kornform erhalten werden. Dies führt zu einer vorteilhaften Handhabung des Pulvers (weniger Staubflug), einer verbesserten Stabilität des Grünkörpers, einer gezielt einstellbaren und für die Silizierung geeigneten Porosität des Grünkörpers und einem effizienteren 3D-Drucken.

Die pulverförmige Zusammensetzung enthält bevorzugt mindestens 80 %, weiter bevorzugt mindestens 90% und am meisten bevorzugt mindestens 100% Koks. Dies führt zu einem geringeren Wärmeausdehnungskoeffizienten des erfindungsgemäßen Bauteils und zu einem insgesamt leichteren Bauteil, aufgrund seiner geringeren Dichte.

Im Rahmen der Erfindung ist es möglich, dass der Koks mit einem flüssigen Aktivator wie beispielsweise einem flüssigen schwefelsauren Aktivator versetzt wird. Durch die Verwendung eines Aktivators kann einerseits die Aushärtungszeit und die notwendige Temperatur für das Aushärten des Binders reduziert werden, andererseits wird die Staubentwicklung der pulverförmigen Zusammensetzung reduziert. Vorteilhafterweise beträgt die Menge an Aktivator 0,05 Gew.-% bis 3 Gew.-%, bevorzugter 0,1 Gew.-% bis 1 Gew.-%, bezogen auf das Gesamtgewicht von Koks und Aktivator. Werden mehr als 3 Gew.-% bezogen auf das Gesamtgewicht von Aktivator und Koks verwendet, so verklebt die pulverförmige Zusammensetzung und die Rieselfähigkeit wird reduziert; werden weniger als 0,05 Gew.-% bezogen auf das Gesamtgewicht von Koks und Aktivator, so ist die Menge an Aktivator, welche mit dem Binder reagieren kann, zu gering, um die gewünschten obigen Vorteile zu erreichen.

Die Auswahl des Binders in Schritt b) ist nicht besonders eingeschränkt. Geeignete Binder sind beispielsweise auf Basis von Phenolharz, Furanharz, Polyimide, Zellulose, Stärke, Zucker, Silikate, siliziumhaltige Polymere, Pech, Polyacrylnitril (PAN) oder Mischungen daraus. Auch Lösungen der genannten Binder sind hierin umfasst. Grundsätzlich sollten die Binder so beschaffen sein, dass nach dem Carbonisieren stabile Körper erhalten werden können, welche die Handhabung beim Überführen in die Silizierungsvorrichtung, sowie die Temperatur beim Silizieren überstehen. Der Binder sollte dabei entweder eine ausreichend hohe Kohlenstoff-Ausbeute oder Sihaltige anorganische Ausbeute bei Verwendung von Si-organischen Bindern nach der Pyrolyse aufweisen. Bei der Wahl von thermoplastischen Bindern wie Pech kann es erforderlich sein, das gesamte Pulverbett zu carbonisieren, um es zu zersetzen und dadurch letztlich zu vernetzen. Gleiches gilt für PAN. Das Pulverbett ohne Binderzusatz fungiert dabei als Stütze des Bauteils, während der thermoplastische Binder wie Pech oder PAN carbonisiert wird. Zusätzlich wirkt das Pulverbett als Oxidationsschutz für den gedruckten Grünkörper, bzw. carbonisierten Grünkörper, wodurch eine Carbonisierung an Luft ermöglicht wird.

Gemäß einer bevorzugten Ausführungsform der vorliegenden Erfindung umfasst der Binder in Schritt b) Phenolharz, Furanharz, Polyimide oder Mischungen daraus. Auch diese können als Lösung vorliegen. Diese Binder sind Harze und Polymere mit vergleichsweise hoher Kohlenstoffausbeute. Sie zählen zu der Klasse von Bindern die durch Härtung in ein nicht schmelzbares Bindersystem überführt werden und beim Silizieren weitgehend in SiC umgewandelt werden. Aufgrund ihrer hohen Kohlenstoffausbeute setzt sich meist nicht sämtlicher Kohlenstoff bei der Silizierung in SiC um und es kommt zu Kohlenstoffeinschlüssen, was zu einem insgesamt leichteren Bauteil führt. Weiterhin führt die hohe Kohlenstoffausbeute dazu, dass der Gehalt an freiem Silizium im Bauteil entsprechend geringer ist, was zu einer verbesserten chemischen Stabilität führt. Unter "freiem Silizium" und, weiter unten, "freiem Kohlenstoff" sind im Rahmen der vorliegenden Erfindung die Elemente in ihrer Reinform zu verstehen, die chemisch nicht, beziehungsweise nur mit sich selbst, verbunden sind.

Gemäß einer anderen bevorzugten Ausführungsform der vorliegenden Erfindung umfasst der Binder in Schritt b) Zellulose, Stärke, Zucker oder Mischungen daraus. Diese werden bevorzugt als Lösung verwendet. Diese Binder müssen in Schritt d) nur getrocknet (geringe Kosten) werden und der bei der Carbonisierung entstehende Kohlenstoffrückstand wandelt sich bei der Silizierung ideal, das heißt vollständig, in SiC um.

Gemäß einer wiederum anderen bevorzugten Ausführungsform der vorliegenden Erfindung umfasst der Binder in Schritt b) Silikate, siliziumhaltige Polymere oder Mischungen daraus. Auch sie können als Lösung vorliegen. Diese Binder müssen ebenfalls gehärtet werden. Sie bilden bei der Carbonisierung von sich aus SiC. Weiterhin ist die Benetzung mit flüssigem Si besser als bei Kohlenstoff, was den Schritt der Silizierung erleichtert.

Bevorzugt ist der Anteil des Binders im Grünkörper nach Schritt d) im Bereich von 2 bis 35 Gew.-%, bevorzugt im Bereich von 3 bis 25 Gew.-% und am meisten bevorzugt im Bereich von 3 bis 10 Gew.-%, bezogen auf das Gesamtgewicht des Grünkörpers. Im Falle einer optionalen Nachimprägnierung, welche weiter unten beschrieben ist, beziehen sich die in diesem Absatz genannten Anteile auf diejenigen vor der optionalen Nachimprägnierung. Dieser Bindergehalt sorgt für eine für die anschließende Silizierung geeignete Stabilität des Grünkörpers.

Der Grünkörper wird nach Schritt d) und vor Schritt e) gemäß einer bevorzugten Ausführungsform der vorliegenden Erfindung mit einem Binder, vorzugsweise mit dem gleichen Binder aus Schritt b), imprägniert und im Anschluss daran wird erneut der Verfahrensschritt d) durchgeführt. Die dadurch erzielte Erhöhung der Dichte des Grünkörpers vor der Silizierung resultiert in einen niedrigeren Si-Gehalt im Bauteil, wodurch ein aus thermischen und chemischen Gesichtspunkten stabileres Bauteil entsteht. Je nach Binderauswahl können kompakte Kohlenstoff-Grünkörper (zum Beispiel bei Phenolharz) oder eher lose Kohlenstoffgerüste (zum Beispiel bei Verwendung von Zellulosen als Binder) erzeugt werden. Erstere werden dann lediglich oberflächlich, letztere nahezu komplett in SiC umgewandelt, wobei sich dies natürlich nur auf den Kohlenstoff bezieht, der vom Binder, bzw. den Bindern nach der Carbonisierung resultiert.

Bevorzugt entspricht der d99-Wert der Korngrößenverteilung der pulverförmigen Zusammensetzung maximal dem 4-fachen, weiter bevorzugt maximal dem 3-fachen, besonders bevorzugt maximal dem 2,5-fachen Wert des d50-Werts. Dies hat weniger Grobkörner und eine schmalere Korngrößenverteilung zur Folge, was ein sicheres Drucken und einen störungsfreien Pulverauftrag begünstigt. Der Begriff "d99" bedeutet, dass 99 % der Partikel kleiner sind als der angegebene Wert. Für die Bestimmung des d99-Werts wurde die gleiche Messmethode verwendet wie bei der Bestimmung des d50.

Bevorzugt enthält die pulverförmige Zusammensetzung zusätzlich ein Pulver, das ausgewählt ist aus der Gruppe bestehend aus Graphit-Pulver, SiC-Pulver, Kohlenstoffpulver, Metallkarbide, gemahlene Carbonfasern und Cellulosepulver. Kohlenstoffpulver umfasst dabei Kokspulver aber auch Ruß, Aktivkohle, Glaskohlenstoff und Rußballen. Rußballen sind erhältlich durch Mischen von Ruß mit Pech und anschließendem Carbonisieren und Mahlen. Bei Verwendung von Aktivkohle oder Zellulose als zusätzliches Pulver, kann ein höherer SiC-Gehalt im keramischen Bauteil erreicht werden. Bei Glaskohlenstoffpulver erhält man durch die niedrigere Dichte des Bauteils ein insgesamt leichteres Bauteil.

Bevorzugt ist das zusätzliche Pulver ein Granulat. Dadurch wird ein effizientes, schnelleres und sicheres 3D-Drucken begünstigt, weil man aus feinen Primärpartikeln ein gröberes Pulver erhalten kann, das überdies nahezu kugelförmig ist. Bevorzugt liegt etwaig verwendetes Graphitpulver als Granulat vor, da durch eine Granulation die naturgemäß unrunden Graphitplättchen zu annähernd kugelförmigen Agglomeraten vereinigt werden können. Bevorzugt umfasst das zusätzliche Pulver daher sogenannten Kugelgraphit, welcher aus granuliertem Naturgraphit besteht.

Bevorzugt weisen die Partikel der pulverförmigen Zusammensetzung im Korngrößenbereich des d(50)-Wertes im Mittel einen Formfaktor (Partikelbreite/ Partikellänge) von mindestens 0,6, weiter bevorzugt mindestens 0,7 und noch weiter bevorzugt von mindestens 0,8 auf. Unter dem Formfaktor wird das Verhältnis von Partikelbreite zu Partikellänge verstanden. Unter dem Korngrößenbereich des d(50)-Wertes der Bereich von d(50) +/- 10 % zu verstehen. Der Formfaktor wurde gemäß ISO 13322-2 mit Hilfe eines sogenannten Camsizer-Geräts der Firma Retsch Technology bestimmt. Hierbei wird mit Hilfe einer Kamera und einem Bildanalysesystem die Partikel hinsichtlich Ihrer Breite und Länge bestimmt und ins Verhältnis gesetzt. Bei besonders feinem Pulver kann der Formfaktor anhand von Schliffbildern mit zugehöriger Bildanalyse alternativ ermittelt werden.

Bevorzugt weisen die Partikel der pulverförmigen Zusammensetzung in einer Fraktion mit der Korngröße zwischen 200 und 250µm im Mittel einen Formfaktor von mindestens 0,5, weiter bevorzugt mindestens 0,6, noch weiter bevorzugt mindestens 0,7 und am meisten bevorzugt mindestens 0,8 auf. Der Vorteil von nahezu runden Partikeln besteht im sicheren 3D-Drucken, störungsfreien Pulverauftrag und der geringeren Tendenz zur Rissindizierung bei thermomechanischer Beanspruchung. Darüber hinaus wurde gefunden, dass auch die Brucharbeit und die Bruchdehnung der entsprechenden keramischen Bauteile verbessert, d.h. erhöht wird, je runder die Partikel sind.

Unter dem Carbonisieren ist die thermische Umwandlung des Binders des Grünkörpers zu Kohlenstoff durch Erhitzen auf Temperaturen über 500°C zu verstehen.

Das Silizieren von Kohlenstoff-Grünkörpern kann grundsätzlich unter Schutzgasatmosphäre (z.B. Ar oder He), im Überdruck, Normaldruck oder im Vakuum stattfinden. Für die Erzeugung von filigranen und komplexen Strukturen, wie beispielsweise Hinterschnitte, Hohlräume und Kühlkanäle, ist es erfindungsgemäß erforderlich, dass das flüssige Silizium von alleine, rein mittels Kapillarkräfte den Grünkörper infiltrieren kann. Im Rahmen der vorliegenden Erfindung wurde nun überraschenderweise gefunden, dass erfindungsgemäß hergestellte Grünkörper genau diese erwünschte Eigenschaft besitzen, nämlich dass mittels 3D-Druck das Porensystem des carbonisierten Grünkörpers derart gestaltet werden kann, dass ohne zusätzliche Druckbeaufschlagung das Bauteil rein durch Kapillarkräfte vollständig und praktisch porenfrei mit Silizium infiltriert wird. Darüber hinaus erfolgt im Abkühlvorgang nach der Infiltration kein wieder-Herauslaufen des flüssigen Siliziums, zusätzlich zu dem üblichen, auf dem Dichtesprung von Silizium basierenden, Herausdrücken von Silizium. Besonders gut funktioniert die Infiltration des Grünkörpers mit flüssigem Silizium im Vakuum, da der Kohlenstoff so besser vom Silizium benetzt wird und das Saugverhalten des Grünkörpers verbessert wird. Des Weiteren kann die Silizierung im Vakuum bei einer niedrigeren Temperatur durchgeführt werden, wobei diese natürlich oberhalb der Schmelztemperatur von Silizium liegen muss. Der erfindungsgemäße Verfahrensschritt f), das Silizieren, erfolgt daher bevorzugt unter Vakuum. Das in diesem Zusammenhang bezeichnete flüssige Silizium umfasst im Rahmen der vorliegenden Erfindung auch Siliziumlegierungen mit einem Silizium-Anteil von mindestens 50 Gew.-%. Vorzugsweise wird jedoch reines Silizium verwendet.

In dem erfindungsgemäßen Verfahren können die Schritte e) und f), das Carbonisieren und das anschließende Silizieren, praktisch in einem einzigen Verfahrensschritt erfolgen, denn bei der Silizierung carbonisiert, beziehungsweise pyrolysiert, der Grünkörper schon beim Aufheizen auf die Silizierungstemperatur - sozusagen in situ - mit. Eine derartige Vorgehensweise ist daher von der vorliegenden Erfindung ausdrücklich umfasst. Nur zur Vermeidung von Missverständnissen sei daher an dieser Stelle klargestellt, dass unter dem Begriff "Grünkörper" im Kontext der Silizierung sowohl der nicht-carbonisierte Grünkörper nach Schritt d), als auch der carbonisierte Grünkörper nach Schritt e) gemeint sein kann.

Bei der Silizierung (Schritt f) liegt der zu silizierende Grünkörper bevorzugt auf Dochten auf, welche aus einem Bad aus der Siliziumschmelze herausragen. Die Dochte sind dabei, ähnlich wie der Grünkörper selbst, in der Lage, das flüssige Silizium mittels Kapillarkräfte durch ihre poröse Struktur hindurch zu leiten. Der Grünkörper selbst taucht dabei nicht in das Siliziumbad ein, sondern befindet sich darüber. Nach vollendeter Silizierung und Abkühlen auf Raumtemperatur, ist der Docht durch das erstarrte Silizium mit dem Bauteil verbunden und muss daher mechanisch entfernt werden. Um das erfindungsgemäße Verfahren noch weiter zu vereinfachen, werden die Dochte bevorzugt bereits als Teil des Grünkörpers vorgesehen, das heißt an diesen "angedruckt" (Schritt c). So kann der Grünkörper, mit den Dochten nach unten weisend, einfach in das für das Siliziumbad vorgesehene Behältnis gestellt werden. Nach vollendeter Silizierung und Abkühlung werden die Dochte, wie gehabt, mechanisch entfernt.

Ein weiterer Gegenstand der vorliegenden Erfindung ist ein dreidimensionales, keramisches Bauteil, welches nach dem erfindungsgemäßen Verfahren hergestellt ist, wobei dieses Bauteil 20 - 75 Gew.-% SiC, 10 - 45 Gew.-% freies Silizium und 10 - 60 Gew.-% freien Kohlenstoff enthält und wobei der im Bauteil enthaltene Kohlenstoff vollständig mit SiC umschlossen ist. Bei zu hohem Silizium-Anteil (größer 45 Gew.-%) sinkt die chemische Stabilität und die Temperaturstabilität. Theoretisch wäre zwar ein möglichst kleiner Siliziumgehalt wünschenswert, allerdings ist mit dem erfindungsgemäßen Verfahren ein Siliziumgehalt unter 10 Gew.-% praktisch nicht zu erreichen. Bei zu hohem Kohlenstoffgehalt (größer 60 Gew.-%) steigt die Oxidationsgefahr des Materials signifikant an. Auch der Kohlenstoffgehalt sollte aus Gründen der Stabilität des Bauteils so niedrig wie möglich sein. Allerdings führt ein höherer Kohlenstoffgehalt wiederum zu einer geringeren Dichte des Materials und damit zu einem leichteren Bauteil.

Dadurch dass das erfindungsgemäß hergestellte Bauteil Kohlenstoff enthält, welcher vollständig von SiC umschlossen ist, liegt kein durchgehend verbundenes Kohlenstoff-Netzwerk vor. Dieser Kohlenstoff ist nicht zu SiC umgesetzt worden. Dies hat erhebliche Vorteile hinsichtlich der Oxidationsstabilität. Während es in gewissen Anwendungen üblich ist, das entsprechende keramische Bauteil mit einem zusätzlichen Oxidationsschutz zu versehen, so ist dies bei dem erfindungsgemäßen Bauteil nicht zwingend erforderlich.

Bevorzugt liegt der Kohlenstoff in partikulärer Form vor und im Wesentlichen alle Kohlenstoffpartikel sind jeweils vollständig mit SiC umschlossen. Dies resultiert in einer besonders hohen Oxidationsstabilität des Bauteils. Die zusammenhängenden Kohlenstoffbereiche im Bauteil erstrecken sich dabei nicht weiter als die Abmessungen der zur Herstellung des keramischen Bauteils eingesetzten Kokspartikel. Die im Zusammenhang mit dem erfindungsgemäßen Verfahren beschriebenen Merkmale der in Schritt a) verwendeten Kokspartikel wirken sich auch auf das erfindungsgemäße Bauteil aus und sind daher selbstverständlich mit den Merkmalen des erfindungsgemäßen Bauteils kombinierbar. Daneben sind auch alle anderen im Zusammenhang mit dem erfindungsgemäßen Verfahren beschriebenen Merkmale natürlich auch mit den Merkmalen des erfindungsgemäßen Bauteils kombinierbar.

Das erfindungsgemäße Bauteil weist bevorzugt eine Dichte von höchsten 3,0 g/cm³, besonders bevorzugt von höchsten 2,5 g/cm³ auf. Dadurch ist es im Vergleich zu bekannten SiC-Keramiken mit vergleichbarer Oxidationsstabilität besonders leicht.

Das erfindungsgemäße Bauteil weist bevorzugt ein E-Modul von höchstens 300 GPa, besonders bevorzugt von höchstens 100 GPa und am meisten bevorzugt von höchstens 50 GPa auf. Der E-Modul wurde dabei aus der linearen Anfangssteigung der Biegekurve aus dem Dreipunktbiegeversuch der Proben zur Ermittlung der Biegefestigkeit ermittelt. Der niedrige E-Modul bedeutet, dass das Material weniger spröde und dadurch wiederum thermoschockbeständiger als SiC-Keramiken mit höherem E-Modul ist. Geringere E-Moduli lassen sich erzielen durch höheren Kohlenstoffgehalt.

Das erfindungsgemäße Bauteil weist bevorzugt eine Festigkeit von mindestens 40 MPa auf und ist damit hinreichend stabil auch für die meisten mechanisch belasteten Bauteile. Die Festigkeit wurde nach dem 3-Punkt-Biegeverfahren in Anlehnung an DIN 51902 bestimmt.

Das erfindungsgemäße Bauteil weist bevorzugt einen Wärmeausdehnungskoeffizienten gemessen in Anlehnung an DIN 51909 zwischen Raumtemperatur und 200°C von höchstens 3,5x10⁻⁶K⁻¹ auf. Dadurch zeichnet es sich durch hohe Formstabilität bei höheren Temperaturen aus. Des Weiteren wird eine hohe Thermoschockbeständigkeit erreicht.

Das erfindungsgemäße Bauteil weist bevorzugt eine Wärmeleitfähigkeit von mindestens 30 W/mK, bevorzugt von mindestens 40 W/mK auf, wobei die Wärmeleitfähigkeit in Anlehnung an DIN 51908 bestimmt wurde. Hierbei wird eine hohe Thermoschockbeständigkeit erreicht. Hohe Wärmeleitfähigkeiten werden durch einen erhöhten SiC-Gehalt erzielt.

Das erfindungsgemäße Bauteil weist bevorzugt eine Brucharbeit von mindestens 150 Nmm, weiter bevorzugt von mindestens 200 Nmm und am meisten bevorzugt von mindestens 300 Nmm auf. Die Brucharbeit wurde aus der Fläche der Biegeverformungskurve des 3-Punkt Biegeverfahren ermittelt. Insbesondere mit runden Kokssorten, wie dem Acetylenkoks, können Bauteile mit einer Brucharbeit von über 300 Nmm erhalten werden.

Das erfindungsgemäße Bauteil weist bevorzugt eine Bruchdehnung von mindestens 0,10%, weiter bevorzugt von mindestens 0,15% und am meisten bevorzugt von mindestens 0,20% auf. Insbesondere mit runden Kokssorten, wie dem Acetylenkoks, können Bauteile mit einer Bruchdehnung von über 0,20% erhalten werden.

Das erfindungsgemäße Bauteil weist bevorzugt Hohlräume, Kühlkanäle und/oder Hinterschnitte auf und besteht insgesamt aus einem gleichmäßigen oder einem sich gemäß der gewünschten Materialeigenschaften des Bauteils graduell ändernden Gefüge der Bestandteile. Das bedeutet, dass es im Bauteil im Gegensatz zu bekannten SiC-Keramiken keine sprunghaften Änderungen des Gefüges, bzw. der Zusammensetzung, beispielsweise verursacht durch eine Fügestelle, gibt, welche oft eine lokale Schwächung des Bauteils bedeuten. Die genannten graduellen Übergänge können beispielsweise durch Mengenvarianz des Binderauftrags in Schritt c) erzielt werden (zum Beispiel Anzahl der abgelegten Tröpfchen pro Fläche). Möglich ist auch eine Varianz des eingesetzten Kokses in Korngröße, Form und Art, wobei dies zu erhöhtem Prozessaufwand führt.

Das erfindungsgemäße dreidimensionale, keramische Bauteil zeichnet sich insbesondere durch seine hohe chemische und mechanische Stabilität und Abriebbeständigkeit aus. Dadurch eignet es sich besonders für den Einsatz in Pumpen, insbesondere als Pumpenlaufrad und Pumpengehäuse für die chemische Industrie, als Brennerdüsen, Brennereinsätze, Auskleidung von Brennerwänden, elektrische Heizelemente und Traggestelle in Hochtemperaturöfen, insbesondere wegen der guten Thermoschockbeständigkeit, und als Sichterlaufrad, bzw. Sichterrad für Mühlen zum Sichten von Mischungen aus Partikeln unterschiedlicher Korngröße. Ein weiterer Aspekt der vorliegenden Erfindung ist daher die Verwendung des erfindungsgemäßen dreidimensionalen, keramischen Bauteils in Pumpen, insbesondere als Pumpenlaufrad und Pumpengehäuse in der chemischen Industrie, als Brennerdüsen, Brennereinsätze, Auskleidung von Brennerwänden, elektrische Heizelemente und Traggestelle in Hochtemperaturöfen, und als Sichterlaufrad. Für diese Verwendungen wird im erfindungsgemäßen Verfahren bevorzugt Acetylenkoks, Fluidkoks, Flexikoks, carbonisierte Ionenaustauscherharzkügelchen oder ein Granulat aus anderen Kokssorten als Hauptbestandteil der pulverförmigen Zusammensetzung in Schritt a) verwendet, da die annähernd kugelrunde Form der Kokspartikel zu vorteilhaften Eigenschaften für diese Verwendung führt.

Das erfindungsgemäße dreidimensionale, keramische Bauteil zeichnet sind insbesondere durch seine hohe chemische Stabilität und Wärmeleitfähigkeit und hohe Thermoschockbeständigkeit aus. Dadurch eignet es sich besonders für den Einsatz als Wärmetauscher oder Element für Wärmetauscher. Ein weiterer Aspekt der vorliegenden Erfindung ist daher die Verwendung des erfindungsgemäßen dreidimensionalen, keramischen Bauteils als Wärmetauscher oder Element für Wärmetauscher.

Das erfindungsgemäße dreidimensionale, keramische Bauteil zeichnet sich insbesondere durch seine hohe mechanische Härte und Abriebbeständigkeit aus. Dadurch eignet es sich besonders für den Einsatz als mechanisch beanspruchtes Bauteil, wie beispielsweise als Gleitlager, Gleitringdichtung, Zahnrad, Kolben und Kolbenhülsen. Ein weiterer Aspekt der vorliegenden Erfindung ist daher die Verwendung des erfindungsgemäßen dreidimensionalen, keramischen Bauteils als mechanisch beanspruchtes Bauteil umfassend Gleitlager, Gleitringdichtung, Zahnrad, Kolben, Kolbenhülsen.

Besonders bevorzugt ist die Verwendung als Kolben mit Hinterschnitten in der Verbrennungsmulde oder Kühlkanälen. Diese sind mit herkömmlichen Verfahren nicht einfach herstellbar und überraschenderweise wurde gefunden, dass das erfindungsgemäße Bauteil für diese Verwendung hervorragend geeignet ist.

Das erfindungsgemäße dreidimensionale, keramische Bauteil zeichnet sich insbesondere durch seine hohe Thermoschockbeständigkeit, hohe Stabilität und Temperaturbeständigkeit, Oxidationsbeständigkeit sowie seinen geringen Wärmeausdehnungskoeffizienten aus. Dadurch eignet es sich besonders für den Einsatz als Gießform, beispielsweise in der Metall verarbeitenden Industrie, und als Tiegel. Ein weiterer Aspekt der vorliegenden Erfindung ist daher die Verwendung des erfindungsgemäßen dreidimensionalen, keramischen Bauteils als Gießform und als Tiegel.

Das erfindungsgemäße dreidimensionale, keramische Bauteil zeichnet sich insbesondere durch seine hohe mechanische Härte aus. Es wurde im Rahmen der vorliegenden Erfindung gefunden, dass die Eigenschaften des erfindungsgemäßen Bauteils mit denen von konventionellen keramischen Materialien für die Ballistik vergleichbar sind. Weiterhin kann das Bauteil praktisch beliebig komplexe Formen annehmen. Dadurch eignet es sich besonders für den Einsatz als ballistische Struktur, insbesondere als eine solche die in der Komplexität ihrer Form über die von gewöhnlichen Platten und Armierungen für die Ballistik hinausgeht. Besonders bevorzugt sind individuelle Körperpanzerungen (z.B. Brustpanzer). Denn auch bei wenigen Stückzahlen können entsprechende Panzerungen schnell und einfach hergestellt werden. Ein zu panzernder Körper muss lediglich gescannt werden (z.B. mittels Laser) und ein entsprechendes Programm steuert automatisch einen 3D-Drucker, für die Fertigung des Grünkörpers.

Ein großer Vorteil ist weiterhin, dass in dem erfindungsgemäßen Bauteil keine Fügestellen vorhanden sind, die bei ballistischen Bauteilen, die aus Platten zusammengesetzt sind, immer vorhanden sind. Durch das erfindungsgemäße Verfahren kann geometrisch eine Segmentierung erhalten werden, wodurch eine Multihitfähigkeit des Gesamtbauteils ermöglicht wird, da die Segmentierung eine Rissstopfunktion übernimmt. Beispielsweise kann hierzu eine relativ dünne Trägerplatte mit schachbrettartig erhabenen Segmenten gedruckt werden. Man erhält dadurch ein einziges, monolithisches Bauteil. Dieses ist durch die erhabenen Segmente multihitfähig. Trifft ein Projektil auf eines der Segmente, so wird dieses zerstört, wobei die Energie des Projektils aufgenommen wird. Die übrigen Segmente bleiben dabei intakt und können weitere Projektile abfangen. Das erfindungsgemäße Bauteil kann sämtliche, in der Ballistik bekannten, passiven Strukturen annehmen. Ein weiterer Aspekt der vorliegenden Erfindung ist daher die Verwendung des erfindungsgemäßen dreidimensionalen, keramischen Bauteils als ballistische Struktur.

Das erfindungsgemäße dreidimensionale, keramische Bauteil zeichnet sich insbesondere durch seine hohe Abriebbeständigkeit aus. Es wurde im Rahmen der vorliegenden Erfindung weiterhin gefunden, dass es für Reibanwendungen geeignete Eigenschaften, wie den Reibungskoeffizient besitzt. Dadurch eignet es sich besonders für den Einsatz als Reibkörper. Darüber hinaus können, bedingt durch das erfindungsgemäße Herstellungsverfahren, beliebig komplexe Strukturen erzeugt werden. Dadurch ist es möglich auch Reibkörper mit noch effizienteren Kühlkanälen herzustellen. Diese können beispielsweise mit Kühlflüssigkeit durchströmt werden, um neben der Kühlwirkung gleichzeitig die Abwärme nutzen zu können. Ein weiterer Aspekt der vorliegenden Erfindung ist daher die Verwendung des erfindungsgemäßen dreidimensionalen, keramischen Bauteils als Reibkörper mit Kühlkanälen oder als Reibbelag.

Das erfindungsgemäße dreidimensionale, keramische Bauteil zeichnet sich insbesondere durch seinen geringen Wärmeausdehnungskoeffizienten und seine durch die geringe Dichte bedingte hohe spezifische Steifheit aus. Dadurch eignet es sich besonders für den Einsatz als Präzisionsbauteil, wie beispielsweise als Satellitenspiegelträger, als Messvorrichtung, als Waferträger in der Halbleiterherstellung und für optische Bänke. Ein weiterer Aspekt der vorliegenden Erfindung ist daher die Verwendung des erfindungsgemäßen dreidimensionalen, keramischen Bauteils als Präzisionsbauteil.

Das erfindungsgemäße dreidimensionale, keramische Bauteil zeichnet sich insbesondere durch seine hohe Oxidationsstabilität, durch den, wie weiter oben beschriebenen, vollständig mit SiC umhüllten Kohlenstoff aus. Dadurch eignet es sich besonders für die Verwendung als Mikroreaktoren, Makroreaktoren, Rohrleitungsauskleidungen und verzweigte Rohrleitungselemente. Durch das erfindungsgemäße Verfahren sind der Komplexität der Strukturen dieser Erzeugnisse praktisch keine Grenzen gesetzt. Ein weiterer Aspekt der vorliegenden Erfindung ist daher die Verwendung des erfindungsgemäßen dreidimensionalen, keramischen Bauteils als Mikroreaktoren, Makroreaktoren, Rohrleitungsauskleidungen und verzweigte Rohrleitungselemente.

Die vorliegende Erfindung wird im Folgenden anhand von Beispielen illustriert. Wenn im Folgenden nicht explizit angegeben, können sämtliche in den Beispielen genannten Merkmale mit den Gegenständen der allgemeinen Beschreibung der vorliegenden Anmeldung kombiniert werden.

### Beispiel 1

Kalzinierter Steinkohlenteerpechkoks wurde gemahlen und hatte nach der Mahlung und Siebung eine Korngrößenverteilung von d10 = 130 µm, d50 = 230 µm und d90 = 390 µm und einen Formfaktor von 0,69. Der Koks wird zunächst mit 1 Gew.-% eines schwefelsauren flüssigen Aktivators für Phenolharz, bezogen auf das Gesamtgewicht von Koks und Aktivator, versetzt und mit einer 3D-Druck Pulverbettmaschine verarbeitet. Eine Rackeleinheit legt dabei auf ein ebenes Pulverbett eine dünne Kokspulverlage (ca. 0,3 mm Höhe) ab und eine Art Tintenstrahldruckeinheit druckt eine alkoholische Phenolharzlösung entsprechend der gewünschten Bauteilgeometrie auf das Koksbett. Im Anschluss daran wird der Drucktisch um die Lagenstärke abgesenkt und erneut eine Lage Koks aufgetragen und erneut Phenolharz lokal aufgedruckt. Durch die wiederholte Vorgehensweise wurden dabei quaderförmige Prüfkörper mit den Abmessungen 168 mm (Länge) x 22 mm (Breite) x 22 mm (Höhe) aufgebaut. Ist das komplette "Bauteil" gedruckt, wird das Pulverbett in einen auf 140 °C vorgewärmten Ofen eingebracht und dort ca. 6 Stunden gehalten. Auch wenn hier bereits von einem Bauteil die Rede ist, so versteht sich von selbst, dass damit noch nicht das fertige erfindungsgemäße Bauteil gemeint ist. Dabei härtet das Phenolharz aus und bildet einen formstabilen Grünkörper. Das überschüssige Kokspulver wird nach der Abkühlung abgesaugt und der Grünkörper des Bauteils entnommen.

Die Dichte des Grünkörpers beträgt nach der Aushärtung des Binders 0,88 g/cm³. Die Dichte wurde geometrisch (durch Wiegen und Bestimmung der Geometrie) bestimmt. Der Grünkörper hatte einen Harzanteil von 5,5 Gew.-%, welcher durch eine Carbonisierungsbehandlung bestimmt wurde. Dabei wurde so vorgegangen, dass die Kohlenstoff-Ausbeute der verwendeten ausgehärteten Harzkomponente vorab mittels einer thermogravimetrischen Analyse (TGA) auf 58 Gew.-% bestimmt wurde. Durch den Massenverlust des Grünkörpers nach der anschließenden Carbonisierung bei 900 °C unter Schutzgasatmosphäre 1 Stunde lang, konnte dann der ursprüngliche Harzanteil im Grünkörper errechnet werden.

Anschließend wurde der carbonisierte Grünkörper einer Phenolharzimprägnierung unterzogen und erneut bei 900 °C carbonisiert. Die Dichte wurde dadurch auf 1,1 g/cm³ erhöht. Diese Vorgehensweise wird im Rahmen der vorliegenden Erfindung als Nachverdichtung bezeichnet.

Der nachverdichtete, carbonisierte Grünkörper (Beispiel 1.1) sowie der carbonisierte Grünkörper ohne Nachverdichtung (Beispiel 1.2) wurden bei 900°C unter Schutzgasatmosphäre 1 Stunde lang carbonisiert und anschließend in einen Silizierungsofen eingebaut, wobei sie auf Dochte gestellt wurden. Die Dochte stehen dabei in einer Si-Pulverschüttung. Die Schüttung selbst befindet sich dabei in einem beschichten Graphittiegel. Der Ofen wird unter Vakuum auf ca. 1600 °C aufgeheizt. Dabei wird das Siliziumpulver flüssig und durch reine Kapillarwirkung steigt das flüssige Silizium über die Dochte in den 3D-gedruckten Grünkörper, ohne zusätzlich aufgebrachten Gas- oder Flüssigkeitsdruck. Ein Teil des Kohlenstoffs reagiert mit dem flüssigen Silizium und bildet SiC. Nach der Abkühlung des Ofens, werden die Bauteile ausgebaut und die Dochte mechanisch entfernt. Die Bauteile weisen keine Porosität auf.

### Beispiel 2:

Kalzinierter Acetylenkoks wurde ungemahlen mit einer Partikelgrössenverteilung von d10 = 117 µm, d50 = 190 µm und d90 = 285 µm und einem Formfaktor von 0,82 mit 0,35 Gew.-% des flüssigen Aktivators gemäß Beispiel 1 versetzt und analog dem Beispiel 1 zu einem Grünkörper verarbeitet.

Der Grünkörper hatte einen Harzanteil von 3,0 Gew.-%. Die Dichte des Grünkörpers lag bei 0,98 g/cm³ und damit deutlich höher als beim gemahlenen Steinkohlenteerpechkoks aus Beispiel 1. Weiterhin zeigte dieser Grünkörper im Vergleich zu dem von Beispiel 1 eine höhere Festigkeit, was die Handhabung erleichterte. Auf eine Nachverdichtung dieses Grünkörpers kann daher verzichtet werden, was die Herstellungskosten senkt.

Dieser Grünkörper wurde direkt (ohne gesonderte vorherige Carbonisierung) in einen Silizierungsofen eingebaut und gemäß Beispiel 1 siliziert. Die Carbonisierung des Binders erfolgte daher in einem Schritt mit der Silizierung.

### Analyse

In der folgenden Tabelle sind einige physikalische und chemische Eigenschaften der hergestellten keramischen Prüfkörper wiedergegeben:

| | Beispiel 1.1 (Mittelwerte) | Beispiel 1.2 (Mittelwerte) | Beispiel 2 (Mittelwerte) |
|---|---|---|---|
| AD (g/cm³) | 2,3 | 2,5 | 2,3 |
| ER (Ohmµm) | 26 | 16 | 19 |
| YM 3p (GPa) | 30 | 31 | 35 |
| FS 3p (MPa) | 58 | 62 | 65 |
| εₘₐₓ (%) | 0,16 | 0,16 | 0,25 |
| W_{Bruch} (Nmm) | 170 | 220 | 340 |
| CTE RT/200°C (µm/(m*K)) | 2,8 | 3,0 | 3,2 |
| TC (W/(m*K)) | 52 | 60 | 51 |
| OP (%) | 0 | 0 | 0 |
| C (%) | 38 | 24 | 41 |
| Si (%) | 26 | 38 | 34 |
| SiC (%) | 36 | 38 | 25 |

| | |
|---|---|
| AD (g/cm³): | Dichte (geometrisch) in Anlehnung an ISO 12985-1 |
| ER (Ohmµm): | elektrischer Widerstand in Anlehnung an DIN 51911 |
| YM 3p (GPa): | E-Modul (Steifigkeit), bestimmt aus dem 3-Punkt-Biegeversuch |
| FS 3p (MPa): | 3-Punkt Biegefestigkeit in Anlehnung an DIN 51902 |
| εₘₐₓ (%): | Bruchdehnung |
| W_{Bruch} (Nmm): | Brucharbeit, bestimmt aus der Fläche der Biegeverformungskurve des 3-Punkt Biegeverfahren |
| CTE RT/200°C (µm/(m*K)): | Wärmeausdehnungskoeffizient gemessen zwischen Raumtemperatur und 200°C in Anlehnung an DIN 51909 |
| TC (W/(m*K)): | Wärmeleitfähigkeit in Anlehnung an DIN 51908 |
| OP (%): | Offene Porosität in Anlehnung an DIN 51918 |
| Beispiel 1.1: | Steinkohlentee niert, bei 900°C rpechkoks, Grünkörper zusätzlich Phenolharzimprägcarbonisiert, siliziert. |
| Beispiel 1.2: | Steinkohlentee sondern direkt rpechkoks, Grünkörper nicht Phenolharzimprägniert, bei 900°C carbonisiert, siliziert. |
| Beispiel 2: | Acetylenkoks, und siliziert in Grünkörper nicht Phenolharzimprägniert, carbonisiert einem Schritt. |

Wie alle Beispiele zeigen, können mit dem erfindungsgemäßen Verfahren keramische Bauteile erhalten werden, die in der Festigkeit (3-Punkt Biegefestigkeit) mit bekannten C/Si/SiC-Werkstoffen vergleichbar sind. Die Festigkeit und auch das E-Modul sind beispielsweise mit denen von carbonfaserverstärkten keramischen Bremsscheiben vergleichbar.

Weiterhin ist der E-Modul im Vergleich zu herkömmlichen SiC-Keramiken um den Faktor 10 niedriger, was eine deutlich verbesserte Thermoschockbeständigkeit nach sich zieht.

Weiterhin ist der Wärmeausdehnungskoeffizient mit ca. 3x10⁻⁶K⁻¹ ausgesprochen niedrig, was insbesondere die Thermoschockbeständigkeit fördert und eine hohe Formbeständigkeit sicherstellt.

Auch die Wärmeleitfähigkeiten größer 50 W/mK sind mit einer Reihe von metallischen Werkstoffen vergleichbar, und damit hinreichend hoch für Wärmetauscheranwendungen. Ebenfalls wird dadurch die Thermoschockbeständigkeit gefördert.

Weiterhin weisen die erfindungsgemäßen Bauteile eine relativ niedrige Dichte im Vergleich zu herkömmlichen SiC-Keramiken und Metallen auf, was zu insgesamt leichteren Bauteilen führt.

Ebenfalls überraschend ist, dass der spezifische elektrische Widerstand sich in einem Werteniveau befindet, dass für Heizelemente typisch ist.

Weiterhin ist überraschend, dass die erfindungsgemäßen Bauteile keine offene Porosität ausweisen. Damit eignen sie sich hervorragend für Anwendungen in oxidativer Atmosphäre sowie für Anwendungen im chemischen Apparatebau.

Was ebenfalls überraschend aus den Beispielen hervorgeht, ist, dass der Acetylenkoks in Beispiel 2 zu Bauteilen mit niedrigerem SiC-Gehalt, bzw. höherem Kohlenstoffgehalt im Vergleich zu den Beispielen 1.1 und 1.2 führt, was eine geringere Dichte verursacht. Schliffbilder der Bauteile haben gezeigt, dass die Ursache hierfür darin liegt, dass sich bei der Silizierung eine schützende SiC-Schicht um die Kokskügelchen bildet.

Weiterhin sind die Festigkeiten von Beispiel 2 deutlich höher als die von den Beispielen 1.1 und 1.2, da vermutlich das rundere Kokskorn weniger Rissinitiierungsfunktion besitzt als weniger runde Kokskörner. Diese Eigenschaft wirkt sich auch positiv auf die vergleichsweise hohe Brucharbeit und hohe Bruchdehnung aus.

Weiterhin kann durch die zusätzliche Imprägnierung des Grünkörpers (Beispiel 1.1) der freie Si-Gehalt erniedrigt werden. Dies ist vorteilhaft, da das Silizium die einzige Komponente im Bauteil ist, die noch flüssig werden kann, was den Einsatz des Bauteils bei sehr hohen Temperaturen (>1400°C) einschränkt.

## Patentansprüche

1. Verfahren zur Herstellung eines dreidimensionalen, keramischen Bauteils enthaltend Siliziumkarbid umfassend die folgenden Schritte:
a) Bereitstellen einer pulverförmigen Zusammensetzung mit einer Körnung (d50) zwischen 3 µm und 500 µm umfassend zumindest 50 Gew.-% Koks, wobei die Partikel der pulverförmigen Zusammensetzung im Korngrößenbereich des d(50)-Werts, was den d(50)-Wert +/- 10 % darstellt, im Mittel einen Formfaktor (Breite/Länge) von mindestens 0,5 aufweisen,
b) Bereitstellen eines flüssigen Binders,
c) flächiges Ablegen einer Lage aus dem in a) bereitgestellten Material und lokales Ablegen von Tröpfchen des in b) bereitgestellten Materials auf diese Lage und Wiederholen des Schrittes c), wobei das lokale Ablegen der Tröpfchen in den jeweils nachfolgenden Wiederholungen dieses Schrittes entsprechend der gewünschten Form des herzustellenden Bauteils angepasst wird,
d) zumindest teilweises Aushärten oder Trocknen des Binders und Erhalt eines die gewünschte Form des Bauteils aufweisenden Grünkörpers,
e) Carbonisieren des Grünkörpers und
f) Silizieren des carbonisierten Grünkörpers durch Infiltration mit flüssigem Silizium, wobei sich der Grünkörper oberhalb der Schmelztemperatur von Silizium und im Wesentlichen über der Oberfläche eines Siliziumbades befindlich durch Kapillarkräfte mit Silizium vollsaugt.

2. Verfahren nach Anspruch 1, **dadurch gekennzeichnet, dass** der Koks ausgewählt wird aus der Gruppe bestehend aus Acetylenkoks, Flexikoks, Fluidkoks, Shot Coke und carbonisierten Ionenaustauscherharzkügelchen.

3. Verfahren nach Anspruch 1 oder 2, **dadurch gekennzeichnet, dass** die pulverförmigen Zusammensetzung gemäß Schritt a) ein Granulat ist.

4. Verfahren nach Anspruch 1 oder 2, **dadurch gekennzeichnet, dass** der Binder in Schritt b) Phenolharz, Furanharz, Polyimide oder Mischungen daraus umfasst.

5. Verfahren nach Anspruch 1 oder 2, **dadurch gekennzeichnet, dass** der Binder in Schritt b) Zellulose, Stärke, Zucker oder Mischungen daraus umfasst.

6. Verfahren nach Anspruch 1 oder 2, **dadurch gekennzeichnet, dass** der Binder in Schritt b) Silikate, siliziumhaltige Polymere oder Mischungen daraus umfasst.

7. Verfahren nach Anspruch 1 oder 2, **dadurch gekennzeichnet, dass** das Silizieren unter Vakuum erfolgt.

8. Dreidimensionales, keramisches Bauteil hergestellt nach einem Verfahren gemäß einem der vorangehenden Ansprüche, **dadurch gekennzeichnet, dass** das Bauteil 20 - 75 Gew.-% SiC, 10 - 45 Gew.-% freies Silizium und 10 - 60 Gew.-% freien Kohlenstoff enthält, wobei der im Bauteil enthaltene Kohlenstoff vollständig mit SiC umschlossen ist.

9. Bauteil nach Anspruch 8, **dadurch gekennzeichnet, dass** der Kohlenstoff in partikulärer Form vorliegt.

10. Bauteil nach einem der Ansprüche 8 oder 9, **dadurch gekennzeichnet, dass** das Bauteil eine Brucharbeit von mindestens 150 Nmm aufweist, wobei die Brucharbeit aus der Fläche der Biegeverformungskurve des 3-Punkt-Biegeverfahrens ermittelt wird.

11. Bauteil nach einem der Ansprüche 8 bis 10, **dadurch gekennzeichnet, dass** das Bauteil eine Festigkeit von mindestens 40 MPa aufweist, wobei die Festigkeit nach dem 3-Punkt Biegeverfahren in Anlehnung an DIN 51902 ermittelt wird.

12. Bauteil nach einem der Ansprüche 8 bis 11, **dadurch gekennzeichnet, dass** das Bauteil Hohlräume, Kühlkanäle oder Hinterschnitte aufweist und insgesamt aus einem gleichmäßigen oder einem sich gemäß der gewünschten Materialeigenschaften des Bauteils graduell ändernden Gefüge der Bestandteile besteht.

13. Verwendung des Bauteils nach einem der Ansprüche 8 bis 11 in Pumpen in der chemischen Industrie, als Brennerdüsen, Brennereinsätze, Auskleidung von Brennerwänden, elektrische Heizelemente und Traggestelle in Hochtemperaturöfen, als Sichterlaufrad, als Wärmetauscher oder Element für Wärmetauscher, als mechanisch beanspruchtes Bauteil umfassend Gleitlager, Gleitringdichtung, Zahnrad, Kolben und Kolbenhülsen, als Gießform und Tiegel, als ballistische Struktur, als Reibkörper mit Kühlkanälen, als Präzisionsbauteil und als Mikroreaktoren, Makroreaktoren, Rohrleitungsauskleidung und verzweigte Rohrleitungen in der chemischen Industrie.

## Claims

1. Method for producing a three-dimensional ceramic component containing silicon carbide, comprising the following steps:
a) providing a powdered composition having a particle size (d50) between 3 µm and 500 µm, comprising at least 50 wt % of coke, wherein the particles of the powdered composition in the particle size range of the d(50) value, which is the d(50) value +/-10%, have, on average, a shape factor (width/length) of at least 0 5,
b) providing a liquid binder,
c) applying, over a surface, a layer of the material provided in a) and locally applying droplets of the material provided in b) to said layer, and repeating step c), wherein the step of locally applying the droplets in subsequent repetitions of said step is adjusted according to the desired shape of the component to be produced,
d) curing or drying the binder, at least in part, and obtaining a green body having the desired shape of the component,
e) carbonising the green body, and
f) siliconising the carbonised green body by means of infiltration with liquid silicon, wherein the green body above the melting temperature of silicon and substantially above the surface of a silicon bath, becomes saturated with silicon as a result of capillary forces

2. Method according to claim 1, **characterised in that** the coke is selected from the group consisting of acetylene coke, flexi-coke, fluid coke, shot coke and carbonised ionexchange resin beads

3. Method according to either claim 1 or claim 2, **characterised in that** the powdered composition according to step a) is a granulate

4. Method according to either claim 1 or claim 2, **characterised in that** the binder in step b) comprises phenolic resin, furan resin, polyimides, or mixtures thereof

5. Method according to either claim 1 or claim 2, **characterised in that** the binder in step b) comprises cellulose, starch, sugar, or mixtures thereof

6. Method according to either claim 1 or claim 2, **characterised in that** the binder in step b) comprises silicates, silicon-containing polymers, or mixtures thereof

7. Method according to either claim 1 or claim 2, **characterised in that** the siliconisation takes place under vacuum

8. Three-dimensional ceramic component produced by a method according to any of the preceding claims, **characterised in that** the component contains 20-75 wt % of SiC, 10-45 wt % of free silicon and 10-60 wt % of free carbon, the carbon contained in the component being completely surrounded by SiC

9. Component according to claim 8, **characterised in that** the carbon is in particulate form

10. Component according to either claim 8 or claim 9, **characterised in that** the component has a work of fracture of at least 150 Nmm, the work of fracture being determined from the area of the bending deformation curve of the 3-point bending method

11. Component according to any of claims 8 to 10, **characterised in that** the component has a strength of at least 40 MPa, the strength being determined according to the 3-point bending process in accordance with DIN 51902

12. Component according to any of claims 8 to 11, **characterised in that** the component has cavities, cooling channels or undercuts and consists overall of a structure of the constituents that is uniform or gradually changes according to the desired material properties of the component

13. Use of the component according to any of claims 8 to 11 in pumps in the chemical industry, as burner nozzles, burner inserts, lining of burner walls, electrical heating elements and load-bearing structures in high-temperature furnaces, as a classifier wheel, as a heat exchanger or element for heat exchangers, as a mechanically stressed component comprising a slide bearing, a rotary seal, a gear, a piston and piston sleeves, as a casting mould and crucible, as a ballistic structure, as a friction body having cooling channels, as a precision component and as microreactors, macroreactors, pipe lining and branched pipes in the chemical industry

## Revendications

1. Procédé de fabrication d'un composant céramique tridimensionnel contenant du carbure de silicium, comprenant les étapes suivantes
a) fournir une composition pulvérulente de granulométne (d50) comprise entre 3 µm et 500 µm comprenant au moins 50 % en poids de coke, les particules de la composition pulvérulente présentant, dans la plage granulométrique de la valeur d(50) qui représente la valeur d(50) à +/-10 %, un facteur de forme moyen (largeur/longueur) d'au moins 0,5,
b) fournir un liant liquide,
c) déposer sur toute la surface une couche constituée du matériau fourni en a) et déposer de manière locale des gouttelettes du matériau fourni en b) sur cette couche et répéter l'étape c), le dépôt local des gouttelettes, lors des répétitions ultérieures respectives de cette étape, étant adapté en fonction de la forme souhaitée du composant à fabriquer,
d) durcir ou sécher au moins partiellement le liant et obtenir un corps cru présentant la forme souhaitée du composant,
e) carboniser le corps cru et
f) silicier le corps cru carbonisé par infiltration de silicium liquide, le corps cru, à une température supérieure à la température de fusion du silicium et situé sensiblement au-dessus de la surface d'un bain de silicium, devenant saturé en silicium par des forces capillaires

2. Procédé selon la revendication 1, **caractérisé en ce que** le coke est choisi dans le groupe constitué par le coke d'acétylène, le coke flexible, le coke fluide, le coke en grenaille et les billes de résine échangeuses d'ions carbonisées

3. Procédé selon la revendication 1 ou 2, **caractérisé en ce que** la composition pulvérulente selon l'étape a) est un granulé

4. Procédé selon la revendication 1 ou 2, **caractérisé en ce que** le liant de l'étape b) comprend une résine phénolique, une résine furane, des polyimides ou leurs mélanges

5. Procédé selon la revendication 1 ou 2, **caractérisé en ce que** le liant de l'étape b) comprend de la cellulose, de l'amidon, du sucre ou leurs mélanges

6. Procédé selon la revendication 1 ou 2, **caractérisé en ce que** le liant de l'étape b) comprend des silicates, des polymères contenant du silicium ou leurs mélanges

7. Procédé selon la revendication 1 ou 2, **caractérisé en ce que** l'enrichissement en silicium est effectué sous vide

8. Composant céramique tridimensionnel fabriqué d'après un procédé selon l'une des revendications précédentes, **caractérisé en ce que** le composant contient 20 à 75 % en poids de SiC, 10 à 45 % en poids de silicium libre et 10 à 60 % en poids de carbone libre, le carbone contenu dans le composant étant complètement entouré de SiC

9. Composant selon la revendication 8, **caractérisé en ce que** le carbone se présente sous forme particulaire

10. Composant selon l'une des revendications 8 ou 9, **caractérisé en ce que** le composant présente un effort de rupture d'au moins 150 Nmm, l'effort de rupture étant déterminé à partir de l'aire de la courbe de déformation en flexion du procédé de flexion en 3 points

11. Composant selon l'une des revendications 8 à 10, **caractérisé en ce que** le composant présente une résistance d'au moins 40 MPa, la résistance étant déterminée par le procédé de flexion en 3 points selon DIN 51902

12. Composant selon l'une des revendications 8 à 11, **caractérisé en ce que** le composant présente des cavités, des canaux de refroidissement ou des contre-dépouilles et est constitué globalement d'une structure des constituants uniforme ou modifiée progressivement en fonction des propriétés de matériau souhaitées du composant

13. Utilisation du composant selon l'une des revendications 8 à 11 dans des pompes de l'industrie chimique, comme buses de brûleur, inserts de brûleur, revêtement de parois de brûleur, éléments chauffants électriques et cadres de support dans des fours à haute température, comme roue de séparation, comme échangeur de chaleur ou élément pour échangeurs de chaleur, comme composant soumis à une contrainte mécanique et comprenant des paliers lisses, joint à bagues glissantes, engrenage, pistons et manchons de piston, comme moule de coulée et creuset, comme structure balistique, comme corps de friction comportant des canaux de refroidissement, comme composant de précision et comme microréacteurs, macroréacteurs, revêtement de conduites de tuyau et conduites de tuyau ramifiées dans l'industrie chimique
